**Europäisches Patentamt**

**European Patent Office**

**Office européen des brevets**

(11) Veröffentlichungsnummer:

**0 057 409**
A2

## (12) EUROPÄISCHE PATENTANMELDUNG

(21) Anmeldenummer: 82100524.6

(51) Int. Cl.³: **G 11 B 15/60**

(22) Anmeldetag: 26.01.82

(30) Priorität: 29.01.81 DE 3102956
18.12.81 DE 3150255

(43) Veröffentlichungstag der Anmeldung: 11.08.82
Patentblatt 82/32

(84) Benannte Vertragsstaaten: **AT BE CH DE FR GB IT LI LU
NL SE**

(71) Anmelder: **Bischl, Johann, Volkartstrasse 17,
D-8000 München 19 (DE)**

(72) Erfinder: **Bischl, Johann, Volkartstrasse 17,
D-8000 München 19 (DE)**

(74) Vertreter: **Weickmann, Heinrich, Dipl.-Ing. et al,
Patentanwälte Dipl.-Ing. H. Weickmann Dipl.-Phys.Dr. K.
Fincke Dipl.-Ing. F.A. Weickmann Dipl.-Chem. B. Huber
Dr.-Ing. H. Liska Möhlstrasse 22,
D-8000 München 86 (DE)**

(54) Führungskörper.

(57) Führungskörper, insbesondere in Form einer zylindrischen Umlenk-Spurrolle bzw. eines zylindrischen Umlenkstifts zur Umlenkung und ggf. spurtreuen Führung von laufenden Folien, insbesondere Magnetband-Folien, dadurch gekennzeichnet, dass er aus Aluminium oder einer Aluminiumlegierung besteht und zumindest im Bereich seiner Führungsfläche mit einer Oberflächenschicht aus wenigstens einem Oxid des Aluminiums oder der Aluminiumlegierung versehen ist.

## Führungskörper

Die Erfindung betrifft einen Führungskörper zur Laufführung von Folien, insbesondere Magnetband-Folien.

Aufgabe der Erfindung ist es, einen Führungskörper dieser Art anzugeben, der eine besonders hohe Oberflächenqualität und besonders hohe Lebensdauer aufweist.

Die Lösung dieser Aufgabe besteht darin, daß der Führungskörper aus Aluminium oder einer Aluminiumlegierung besteht und zumindest im Bereich seiner Führungsfläche mit einer Oberflächenschicht aus wenigstens einem Oxid des Aluminiums oder der Aluminiumlegierung versehen ist.

Um zu erreichen, daß die Oberflächenschicht eine besonders niedrige Porendichte bei gleichzeitig geringem Porendurchmesser aufweist, ist sie bevorzugt dadurch gekennzeichnet, daß die Oberflächenschicht eine durch anodische Gleichstrom-Oxidation in einem gekühlten Säureelektrolyten gebildete Schicht ist.

Derart ausgebildete Oberflächenschichten sind an sich nach dem zum Anmeldezeitpunkt öffentlich zugänglichen Prospekt Hart-Coat der Firma AHC Oberflächentechnik, D-5014 Kerpen/ Erft, bekannt. Eine besonders korrosionsfeste Oberflächenschicht dieser Art ist dadurch gekennzeichnet, daß sie ein spezifisches Volumen aufweist, das mindestens das 1,5-fache, vorzugsweise mindestens das 2-fache des spezifischen Volumens des Aluminiums oder der Aluminiumlegierung beträgt.

Die Oberflächenschicht ist besonders hart und verschleißfest, wenn ihre Härte 300 bis 600 HV, vorzugsweise 350 bis 550 HV beträgt.

Eine besonders hohe Dichte erhält die Oberflächenschicht dann, wenn ihr Porenvolumen 7 bis 13 %, vorzugsweise 8 bis 12 %, beträgt.

Für die Zwecke der Erfindung haben sich besonders Oberflächenschichten bewährt, deren Dicke 10 bis 60 µm, vorzugsweise 20 bis 50 µm, beträgt.

Um eine Beschädigung der Folie zu vermeiden, weist die Oberflächenschicht bevorzugt eine Rauhtiefe von 0,1 bis 0,5 µm auf. Eine solche Rauhtiefe ist bevorzugt durch Polieren mittels einer neben Schleifkörnern Graphit enthaltenden Schleifscheibe unter Verwendung einer wasserlöslichen Lackharze auf Alkyd- oder Melaminbasis enthaltenden Schleifflüssigkeit zu erzielen. Vorzugsweise erfolgt dabei eine Kühlung der Schleifflüssigkeit auf 16°C bis 20°C, insbesondere 18°C. Die Schleifflüssigkeit sollte im Umlauf ständig gefiltert werden, bevorzugt mit einem Mikrofilter. Das Schleifen geschieht am zweckmäßigsten unter einem voreingestellten Zustelldruck.

Die vorstehend erläuterten Grundsätze lassen sich bei Führungskörpern mit beliebiger, beispielsweise ebener Führungsfläche anwenden. Bevorzugt ist der Führungskörper jedoch als zylindrische, drehbar zu lagernde Umlenkrolle oder aber als zylindrischer, feststehend anzubringender Umlenkstift ausgebildet. Zur Verbesserung der Spurtreue, können in axialer Richtung beiderseits der Führungsfläche Kantenführungsflansche vorgesehen sein.

Um zu erreichen, daß die Folie beim Lauf um die Umlenkrolle bzw. den Umlenkstift keine Luft einschließt, ist die Führungsfläche zweckmäßigerweise mit zumindest einer Ringnut versehen. Bevorzugt ist an den axialen Enden der Führungsfläche je eine Ringnut vorgesehen. Durch diese Ringnuten wird auch ein präziserer Lauf der Folie bewirkt. Die endständigen Ringnuten sind insbesondere bei Umlenkrollen bzw. Umlenkstiften mit Kantenführungsflanschen von Vorteil.

In Kombination mit der dank ihrer Beschaffenheit sich nicht statisch aufladenden Oberflächenschicht erhält man eine spurtreue Führung der Folien, ohne daß die Folien beschädigt werden, bei außerordentlich hoher Lebensdauer der Umlenk-Spurrollen.

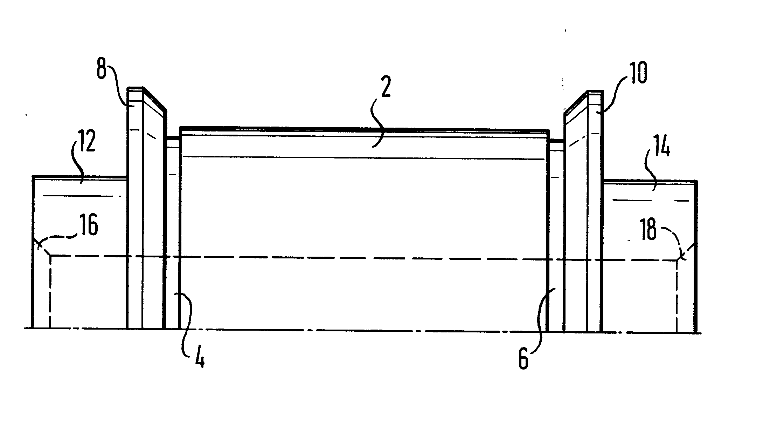

Die Erfindung wird im folgenden an einem Ausführungsbeispiel unter Hinweis auf die beigefügte Zeichnung beschrieben:

Die Zeichnung zeigt die Oberhälfte einer erfindungsgemäßen Umlenk-Spurrolle in Seitenansicht.

Die Spurrolle weist einen zylindrischen Körper 2 auf, dessen Enden mit je einer Ringnut 4, 6 versehen sind. An diese Ringnuten 4, 6 schließen sich Ringflansche 8 und 10 sowie Lagerzapfen 12 und 14 mit mittigen Einstichen 16 und 18 in ihren äußeren Stirnflächen an.

Der materielle Aufbau der zylindrischen Körper 2 ist oben beschrieben.

Die der Kantenführung dienenden Ringflansche 8 und 10 können gegebenenfalls entfallen. Der zylindrische Körper kann, wie dargestellt, im wesentlichen Hülsenform haben; er kann aber auch, insbesondere bei kleinem Durchmesser, als Führungsstift mit zylindrischem Vollprofil ausgebildet sein.

Patentansprüche

1. Führungskörper zur Laufführung von Folien, insbesondere Magnetband-Folien, dadurch gekennzeichnet, daß er aus Aluminium oder einer Aluminiumlegierung besteht und zumindest im Bereich seiner Führungsfläche mit einer Oberflächenschicht aus wenigstens einem Oxid des Aluminiums oder der Aluminiumlegierung versehen ist.

2. Führungskörper nach Anspruch 1, dadurch gekennzeichnet, daß die Oberflächenschicht eine durch anodische Gleichstrom-Oxidation in einem gekühlten Säureelektrolyten gebildete Schicht ist.

3. Führungskörper nach Anspruch 1 oder 2, dadurch gekennzeichnet, daß die Oberflächenschicht ein spezifisches Volumen aufweist, das mindestens das 1,5-fache, vorzugsweise mindestens das 2-fache des spezifischen Volumens des Aluminiums oder der Aluminiumlegierung beträgt.

4. Führungskörper nach einem der vorstehenden Ansprüche, dadurch gekennzeichnet, daß die Härte der Oberflächenschicht 300 bis 600 HV, vorzugsweise 350 bis 550 HV, beträgt.

5. Führungskörper nach einem der vorstehenden Ansprüche, dadurch gekennzeichnet, daß das Porenvolumen der Oberflächenschicht 7 bis 13 %, vorzugsweise 8 bis 12 %, beträgt.

6. Führungskörper nach einem der vorstehenden Ansprüche, dadurch gekennzeichnet, daß die Dicke der Oberflächenschicht 10 bis 60 µm, vorzugsweise 20 bis 50 µm, beträgt.

7. Führungskörper nach einem der vorstehenden Ansprüche, dadurch gekennzeichnet, daß die Oberflächenschicht eine Rauhtiefe von 0,1 bis 0,5 µm aufweist.

8. Führungskörper nach einem der vorstehenden Ansprüche, dadurch gekennzeichnet, daß er als zylindrische Umlenkrolle oder als zylindrischer Umlenkstift ausgebildet ist.

9. Führungskörper nach Anspruch 8, dadurch gekennzeichnet, daß die Umlenkrolle bzw. der Umlenkstift an ihren bzw. seinen axial gegenüberliegenden Enden Kantenführungsflansche für die spurtreue Führung der laufenden Folie aufweist.

10. Führungskörper nach Anspruch 8 oder 9, dadurch gekennzeichnet, daß die Umlenkrolle bzw. der Umlenkstift an ihren bzw. seinen Enden je eine Ringnut (4, 6) aufweist.

11. Verfahren zum Polieren eines Führungskörpers nach einem der vorstehenden Ansprüche, dadurch gekennzeichnet, daß eine neben Schleifkörnern Graphit enthaltende Schleifscheibe verwendet wird.

12. Verfahren nach Anspruch 11, dadurch gekennzeichnet, daß eine Schleifflüssigkeit verwendet wird, die wasserlösliche Lackharze auf Alkyd- oder Melaminbasis enthält.

13. Verfahren nach einem der Ansprüche 11 oder 12, dadurch gekennzeichnet, daß die Schleifflüssigkeit auf 16°C bis 20°C, vorzugsweise auf 18°C, gekühlt wird.

14. Verfahren nach einem der Ansprüche 11 bis 13, dadurch gekennzeichnet, daß die Schleifflüssigkeit im Umlauf - insbesondere mit einem Mikrofilter - gefiltert wird.

15. Verfahren nach einem der Ansprüche 11 bis 14, dadurch gekennzeichnet, daß die Schleifscheibe mit einem vorgegebenen Druck an den Körper angestellt wird.

-1/1